# EUROPÄISCHE PATENTANMELDUNG

(11) **EP 2 113 976 A1**
(43) Veröffentlichungstag der Anmeldung: **04.11.2009**
(21) Anmeldenummer: 09159079.4
(22) Anmeldetag: 29.04.2009
(51) Int. Cl.: H02G 3/04, A62C 3/16, E21F 17/06

(54) **Brandschutzabdeckung**

(30) Priorität: 02.05.2008 DE 102008021918
(71) Anmelder: KAEFER Isoliertechnik GmbH & Co. KG, 28195 Bremen (DE)
(72) Erfinder: Burgard, Sven, 35398, Giessen (DE); Unger, Heiko, 35463, Fernwald (DE); Leithäuser, Ralf, 35085, Hachborn (DE)
(74) Vertreter: von Ahsen, Erwin-Detlef

(57) **Zusammenfassung**

Die Erfindung betrifft eine Brandschutzabdeckung, insbesondere zum Abdecken eines Kabelkanals (11), mit einem Abdeckelement (16, 17) aus einer Brandschutzplatte (24, 25, 26). Zum Erreichen einer einfachen und schnellen De- und Remontage weist die Brandschutzabdeckung eine fest montierte Positionierungsleiste (14) und ein Festsetzelement (18, 21) zum ortsfesten Positionieren des Abdeckelementes (16, 17) auf, wobei das Festsetzelement (18, 21) die Positionierungsleiste (14) und das Abdeckelement (16, 17) mittels einer formschlüssigen Verbindung miteinander verbindet.

## Beschreibung

Die Erfindung betrifft eine Brandschutzabdeckung, insbesondere zum Abdecken eines Kabelkanals, mit einem Abdeckelement aus einer Brandschutzplatte.

Eine derartige Brandschutzabdeckung ist aus dem Stand der Technik seit langem bekannt.

In Tunneln verlegte Kabel müssen brandgeschützt sein, damit im Brandfall für einen definierten Zeitraum die Funktion der Kabel gewährleistet ist. So muss der Brandschutz gemäß der Brandschutzklasse E 90 einem Feuer unter definierten Bedingungen für 90 Minuten widerstehen. Es ist bekannt, Kabel auf Kabelbahnen zur Tunnelinnenseite hin offen zu verlegen. In diesem Fall wird zur Gewährleistung eines Brandschutzes entweder eine spezielle Isolierung mit brandschützenden Eigenschaften für die Kabel verwendet, oder nachträglich nach der Verlegung der Kabel eine brandschützende Beschichtung aufgebracht. Alternativ werden die Kabel in Kabelkanälen verlegt, die in die Betonwand des Tunnels integriert sind. Zum Erreichen eines Brandschutzes benötigen diese Kanäle tunnelseitig eine gegen Brandeinfluss schützende Brandschutzabdeckung.

Hierbei ist von Nachteil, dass zum Auswechseln schadhafter Kabel, einer zusätzlichen Verlegung von Kabeln und/oder einer Revision eine De- und Remontage der Brandschutzabdeckung sehr zeitintensiv und aufwendig ist. Die Brandschutzabdeckung wird durch eine Vielzahl von geeigneten Befestigungsmitteln, wie beispielsweise Schrauben und Dübeln, an der Tunnelwand bzw. dem Kabelkanal befestigt. Neben dem hohen Zeitaufwand zur De- und Remontage der Brandschutzabdeckung ist nachteilig, dass beim Bohren der Dübellöcher in den hochwertigen Beton der Tunnelwand bzw. des Kabelkanals die in dem Beton sich befindenden Armierungen beschädigt oder geschwächt werden können. Des Weiteren ist von Nachteil, dass durch die Verwendung von beispielsweise Schrauben und ein zu festes Anziehen der Schrauben Pressungen und damit Beschädigungen der Brandschutzplatte entstehen können. Zudem besteht die Gefahr, dass Brandschutzplatten aufgrund ausgebrochener Bohrlöcher aufwendig nachgearbeitet oder ersetzt werden müssen. Aufgrund des erheblichen Zeit- und Montageaufwandes besteht des Weiteren das Risiko, dass der laufende Verkehr in einem Tunnel erheblich beeinträchtigt wird.

Daher ist es das der Erfindung zugrundeliegende Problem, eine Brandschutzabdeckung der vorgenannten Art derart weiterzuentwickeln, dass die Brandschutzabdeckung auf einfache und schnelle Weise de- und remontierbar ist.

Zur Lösung des der Erfindung zugrundeliegenden Problems ist die Brandschutzabdeckung der vorgenannten Art gekennzeichnet durch eine fest montierte Positionierungsleiste und ein Festsetzelement zum ortsfesten Positionieren des Abdeckelementes, wobei das Festsetzelement die Positionierungsleiste und das Abdeckelement mittels einer formschlüssigen Verbindung miteinander verbindet.

Somit setzt sich die Brandschutzabdeckung modulbauartig aus einer Positionierungsleiste, einem Festsetzelement und einem Abdeckelement zusammen. Dies ermöglicht neben der zu erwartenden brandschützenden Wirkung aufgrund des aus einer Brandschutzplatte bestehenden Abdeckelementes eine derartige Konstruktion, dass eine rasche De- und Remontage der Brandschutzabdeckung möglich ist. Des Weiteren wird die Anzahl der benötigten Befestigungsmittel, wie beispielsweise Schrauben und Dübel, zur Befestigung im hochwertigen Beton des Tunnels bzw. des Kabelkanals erheblich reduziert. Somit wird die Gefahr einer Beschädigung und/oder Schwächung der sich in dem Beton befindlichen Armierungen erheblich verringert. Das Abdeckelement wird mittels des Festsetzelementes formschlüssig mit der ortsfesten Positionierungsleiste verbunden. Hierdurch wird die Gefahr einer Beschädigung des Abdeckelementes, beispielsweise durch Schrauben und/oder Bohrlöcher, vollständig vermieden.

Die Positionierungsleiste ist hierbei insbesondere an dem abzudeckenden Kabelkanal fest montiert. Der Kabelkanal ist vorzugsweise als ein Hohlraum oder eine Nut ausgebildet. Dieser Kabelkanal kann mittels betontechnischer Mittel beispielsweise in einer Wand, insbesondere einer Tunnelwand, einem Boden und/oder einer Decke hergestellt sein. Die Brandschutzabdeckung ist insbesondere plattenartig und/oder eben ausgebildet. Somit wird der als Kabelkanal dienende Hohlraum oder die Nut von der flachen Brandschutzabdeckung abgedeckt.

Da das Abdeckelement keine Bohrlöcher und/oder Schrauben aufweist, ist die erfindungsgemäße Konstruktion der Brandschutzabdeckung wegen der glatten, ebenen und ungestörten Oberfläche für Beschichtungen, beispielsweise mit einer Farbe, besonders gut nutzbar. Des Weiteren hat sich gezeigt, dass die erfindungsgemäße Brandschutzabdeckung allen Druck- und Sogkräften, die in einem Tunnel durch den fließenden Verkehr auftreten, dauerhaft standhält.

Nach einer Weiterbildung ist die formschlüssige Verbindung als eine Steckverbindung ausgebildet. Eine Steckverbindung, bei der eine Art Nase in eine der Nase entsprechende Nut oder ein Loch gesteckt wird, ist eine der einfachsten denkbaren formschlüssigen Verbindungen. Eine solche Steckverbindung lässt sich schnell und einfach herstellen und wieder lösen. Zudem ergeben sich aufgrund der Einfachheit der formschlüssigen Verbindung geringe Herstellungskosten.

Nach einer weiteren Ausführungsform sind die Positionierungsleiste und das Festsetzelement aus brandhemmendem Material, insbesondere Brandschutzplatten, hergestellt. Somit sind sämtliche Module der Brandschutzabdeckung aus brandhemmendem Material herstellbar, wodurch die brandhemmende Wirkung der Brandschutzabdeckung noch einmal erheblich erhöht wird. Zudem ergibt sich bei der Verwendung gleichartiger Brandschutzplatten zur Herstellung der Positionierungsleiste, des Festsetzelementes und des Abdeckelementes ein geringer und damit kostengünstiger Herstellungsaufwand.

Gemäß einer Weiterbildung sind mehrere Abdeckelemente mittels einer Nut- und Federverbindung formschlüssig miteinander verbindbar. Somit lässt sich die Brandschutzabdeckung durch die Verwendung mehrerer Abdeckelemente entsprechend der notwendigen Dimension der Abdeckung modulbauartig erweitern. Hierbei wird aufgrund der formschlüssigen Verbindung durch eine Nut- und Federverbindung vollständig auf die Verwendung zusätzlicher Befestigungsmittel verzichtet. Somit ist die Gefahr einer Beschädigung der Abdeckelemente durch Befestigungsmittel ausgeschlossen, während gleichzeitig aufgrund der Nut- und Federverbindung eine dauerhafte Verbindung zwischen den Abdeckelementen zuverlässig gewährleistet ist. Zudem besteht hierdurch die Möglichkeit, lediglich ein einzelnes Abdeckelement aus einem Verbund von mehreren Abdeckelementen herauszulösen, ohne die gesamte Abdeckung der Brandschutzabdeckung lösen zu müssen. Vorzugsweise ist eine U-förmige Aufnahmeleiste für das Abdeckelement vorgesehen. Somit ist das Abdeckelement mit einer Kante in die Aufnahmeleiste hineinstellbar. Hierdurch wird die Kante des Abdeckelementes vor Beschädigungen geschützt. Nach einer weiteren Ausführungsform ist das Abdeckelement, insbesondere zum De- und Remontieren und/oder bei nicht eingesetztem Festsetzelement, in der Aufnahmeleiste verschiebbar. Damit muss das Abdeckelement für einen Zugang zum Kabelkanal nicht vollständig entfernt werden, sondern eine Entfernung des Festsetzelementes reicht aus, um das Abdeckelement derart in der Aufnahmeleiste zu verschieben, dass der Kabelkanal an der gewünschten Stelle zugänglich ist. Die Aufnahmeleiste kann aus brandhemmenden Material, insbesondere Brandschutzplatten, hergestellt sein, und vorzugsweise ist die Aufnahmeleiste der der Positionierungsleiste abgewandten Seite des Abdeckelementes zugeordnet. Somit ist eine erste Kante des Abdeckelementes in der U-förmigen Aufnahmeleiste geführt, während eine zweite gegenüberliegende Kante des Abdeckelementes der Positionierungsleiste zugeordnet ist. Hierdurch ist eine gute Positionierung und ein sicherer Halt des Abdeckelementes gewährleistet.

Nach einer weiteren Ausführung weist die Positionierungsleiste eine Öffnung zur, insbesondere formschlüssigen, Aufnahme des Festsetzelementes auf. Somit ist das Festsetzelement auf einfache Weise durch eine Öffnung der Positionierungsleiste führbar, um die formschlüssige Verbindung herzustellen. Vorteilhafterweise weist das Abdeckelement an der der Positionierungsleiste zugewandten Seite eine Vertiefung zur, insbesondere formschlüssigen, Aufnahme des Festsetzelementes auf. Damit ist die formschlüssige Verbindung dadurch herstellbar, dass das Festsetzelement durch die Öffnung der Positionierungsleiste und in die Vertiefung des Abdeckelementes geführt wird. Gemäß einer weiteren Ausführungsform ist das Festsetzelement als ein Riegel oder ein Schwert ausgebildet. Die Herstellung eines derartigen Festsetzelementes ist sehr einfach und kostengünstig zu realisieren.

Nach einer Weiterbildung ist das Abdeckelement dreilagig aus Brandschutzplatten aufgebaut, wobei vorzugsweise die Brandschutzplatten miteinander verklammert sind. Hierdurch ergibt sich zum einen ein erhöhter Brandschutz mit einem größeren Feuerwiderstand, sowie eine einfache Herstellung der Vertiefung innerhalb des Abdeckelementes. Die Vertiefung des Abdeckelementes ist dadurch herstellbar, dass die mittlere Brandschutzplatte mit entsprechenden Aussparungen versehen ist.

Gemäß einer weiteren Ausführungsform ist ein Verbundelement zwischen zwei Abdeckelementen angeordnet und vorzugsweise lösbar mit den Abdeckelementen verbunden. Ein solches Verbundelement kann in bestimmten Abständen in einem Verbund von mehreren Abdeckelementen vorgesehen sein. Hierdurch wird der Nut- und Federverbund unterbrochen, wodurch das Herausnehmen einzelner Abdeckelemente erleichtert wird. Vorzugsweise wird das Verbundelement durch geeignete Befestigungsmittel, insbesondere Hammerkopfschrauben, mit den auf beiden Seiten angrenzenden Abdeckelementen verschraubt. Zudem kann das Verbundelement mittels eines Festsetzelementes mit der Positionierungsleiste formschlüssig verbunden werden. Vorzugsweise ist das Verbundelement aus brandhemmendem Material, insbesondere Brandschutzplatten, hergestellt. Somit ist auch bei der Verwendung eines Verbundelementes ein hoher Brandschutz gewährleistet.

Nach einer Weiterbildung sind Brandschutzdichtungen, insbesondere im Bereich der Positionierungsleiste, der Aufnahmeleiste und/oder des Verbundelementes, vorgesehen. Die Brandschutzdichtungen ermöglichen einerseits die De- und Remontage der Abdeckelemente und dichten andererseits den Kabelkanal im Brandfall zusätzlich und sicher gegen ein Feuer ab, da die Brandschutzabdichtung aus einem im Brandfall aufblähenden Material besteht.

Von besonderem Vorteil ist die Verwendung einer erfindungsgemäßen Brandschutzabdeckung zum Abdecken eines Kabelkanals, insbesondere in einem Tunnel.

Nachfolgend wird die Erfindung anhand von Ausführungsbeispielen mittels der folgenden Zeichnungen näher erläutert. Es zeigen:
- Fig.1 1: eine schematische Draufsicht der erfindungsgemäßen Brandschutzabdeckung und
- Fig. 2: eine geschnittene Seitenansicht der Brandschutzabdeckung gemäß Fig. 1.

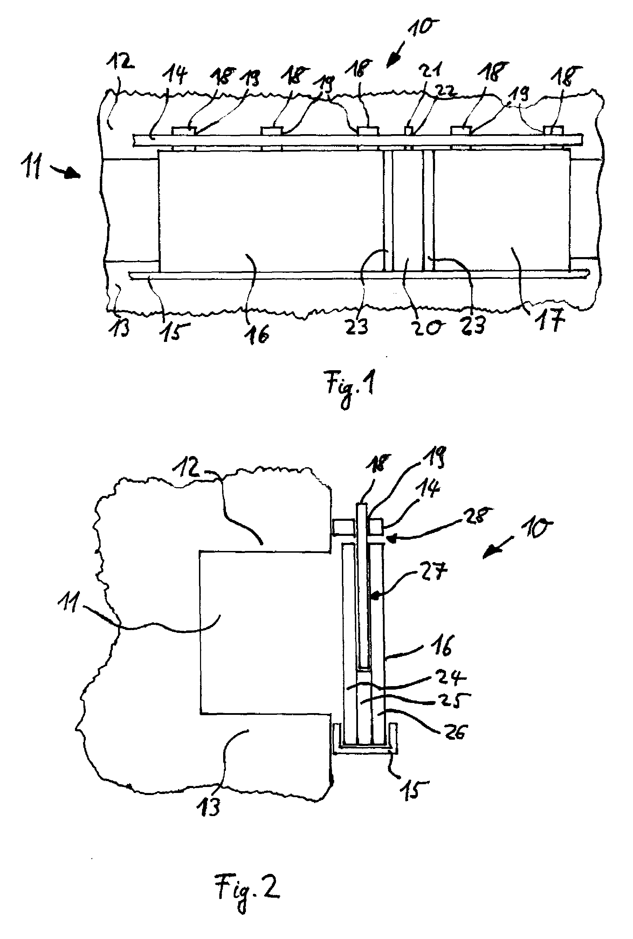

Fig. 1 zeigt eine Frontansicht einer Brandschutzabdeckung 10. Ein Kabelkanal 11 weist einen oberen Schenkel 12 und einen unteren Schenkel 13 auf. Der Kabelkanal 11 ist als eine Nut 11 ausgebildet. In dem hier gezeigten Ausführungsbeispiel ist der Kabelkanal 11 in einer Wand aus Beton eingelassen. An der Frontfläche des oberen Schenkels 12 ist eine Positionierungsleiste 14 in Längsrichtung des Kabelkanals 11 angeordnet. Die Positionierungsleiste 14 ist mit nicht näher dargestellten Schrauben und Dübeln an den Schenkel 12 montiert. Ebenfalls mit nicht näher dargestellten Schrauben und Dübeln ist parallel zur Positionierungsleiste 14 eine Aufnahmeleiste 15 an dem unteren Schenkel 13 montiert. Zwischen der oberen Positionierungsleiste 14 und der unteren Aufnahmeleiste 15 ist ein Abdeckelement 16 und ein Abdeckelement 17 angeordnet. Die Abdeckelemente 16 und 17 stehen mit ihrer unteren Kante in der U-förmigen Aufnahmeleiste 15. Die Abdeckelemente 16, 17 sind mittels Festsetzelementen 18 mit der Positionierungsleiste 14 formschlüssig verbunden. Hierzu weist die Positionierungsleiste 14 Öffnungen 19 auf, durch die die Festsetzelemente 18 durchführbar sind. Hierbei entsprechen die Öffnungen 19 der äußeren Kontur der Festsetzelemente 18.

Zwischen dem Abdeckelement 16 und dem Abdeckelement 17 ist ein Verbundelement 20 angeordnet. Das Verbundelement 20 ist mittels eines Festsetzelementes 21 und einer Öffnung 22 in der Positionierungsleiste 14 formschlüssig mit der Positionierungsleiste 14 verbunden. Das Verbundelement 20 ist im Bereich von Streifen 23 auf nicht näher dargestellte Weise mittels Hammerkopfschrauben mit den Abdeckelementen 16, 17 verbunden. Die Streifen 23 sind hier als Brandschutzabdichtungen 23 ausgebildet.

Fig. 2 zeigt eine seitlich geschnittene Darstellung der Brandschutzabdeckung gemäß Fig. 1. Das Abdeckelement 16 ist dreilagig aus Brandschutzplatten 24, 25, 26 zusammengesetzt. Die mittlere Brandschutzplatte 25 weist zur Aufnahme des Festsetzelementes 18 eine Vertiefung 27 auf. In einem Zwischenraum 28 zwischen dem Abdeckelement 16 und der Positionierungsleiste 14 sind auf nicht näher dargestellte Weise Brandschutzabdichtungen vorgesehen, die aus einem im Brandfall aufblähenden Material bestehen.

### Nachfolgend wird die Funktionsweise der erfindungsgemäßen Brandschutzabdeckung gemäß Fig. 1 und 2 näher erläutert:

Zur Erstmontage der Brandschutzabdeckung 10 wird die Positionierungsleiste 14 an der Front des Schenkels 12 mittels geeigneter Befestigungsmittel, beispielsweise Schrauben und Dübeln, befestigt. Ebenso wird die Aufnahmeleiste 15 parallel zur Positionierungsleiste 14 an der Front des Schenkels 13 montiert. Darauf folgend werden Abdeckelemente 16, 17 in die U-förmige Aufnahmeleiste 15 gestellt und an den vorgesehenen Ort verschoben. Dort werden die Abdeckelemente 16, 17 mittels Festsetzelementen 18, die hier als Schwerter 18 ausgebildet sind, formschlüssig mit der Positionierungsleiste 14 verbunden. Zum Erreichen der formschlüssigen Verbindung werden die Schwerter 18 durch Öffnungen 19 in der Positionierungsleiste 14 und in Vertiefungen 27 in den Abdeckelementen 16, 17 hineingesteckt. Hierdurch ergibt sich eine ortsfeste Positionierung der Abdeckelemente 16, 17. Die Abdeckelemente 16, 17 können mittels einer Nut- und Federverbindung miteinander formschlüssig verbunden werden. Alternativ hierzu ist es möglich, in geeigneten Abständen ein Verbundelement 20 zwischen den Abdeckelementen 16, 17 anzuordnen. Das Verbundelement 20 wird mittels eines Festsetzelementes 21 formschlüssig mit der Positionierungsleiste 14 verbunden. Des Weiteren wird das Verbundelement 20 mittels Hammerkopfschrauben mit den seitlich angrenzenden Abdeckelementen 16, 17 verschraubt. Anschließend wird im Bereich der Hammerkopfschrauben jeweils ein Streifen 23 eingesetzt, der als eine Brandschutzabdichtung 23 ausgebildet ist..

Zur lediglich lokalen Demontage der Brandschutzabdeckung ist es nunmehr lediglich notwendig, zunächst die Streifen 23 zu entfernen, sodann die Hammerkopfschrauben des Verbundelementes 20 zu lösen, das Festsetzelement 21 aus dem Verbundelement 20, der Vertiefung 27 und der Öffnung 22 der Positionierungsleiste 14 zu ziehen, um dann das Verbundelement 20 zu entfernen. Darauf folgend werden die Festsetzelemente 18 aus den angrenzenden Abdeckelementen 16, 17 entfernt, wodurch diese seitlich in der Aufnahmeleiste 15 verschiebbar sind. Hierdurch wird die formschlüssige Nut- und Federverbindung zwischen den aneinander angrenzenden Abdeckelementen aufgehoben und die Abdeckelemente 16,17 können somit entnommen werden.

Somit ist aufgrund der erfindungsgemäßen Brandschutzabdeckung eine rasche De- und Remontage der Abdeckelemente realisierbar.

### Bezugszeichenliste:

- 10: Brandschutzabdeckung
- 11: Kabelkanal
- 12: Schenkel
- 13: Schenkel
- 14: Positionierungsleiste
- 15: Aufnahmeleiste
- 16: Abdeckelement
- 17: Abdeckelement
- 18: Festsetzelement
- 19: Öffnung
- 20: Verbundelement
- 21: Festsetzelement
- 22: Öffnung
- 23: Streifen
- 24: Brandschutzplatte
- 25: Brandschutzplatte
- 26: Brandschutzplatte
- 27: Vertiefung
- 28: Zwischenraum

## Patentansprüche

1. Brandschutzabdeckung, insbesondere zum Abdecken eines Kabelkanals (11), mit einem Abdeckelement (16, 17) aus einer Brandschutzplatte (24, 25, 26), **gekennzeicnnet durch** eine fest montierte Positionierungsleiste (14) und ein Festsetzelement (18, 21) zum ortsfesten Positionieren des Abdeckelementes (16, 17), wobei das Festsetzelement (18, 21) die Positionierungsleiste (14) und das Abdeckelement (16, 17) mittels einer formschlüssigen Verbindung miteinander verbindet.

2. Brandschutzabdeckung nach Anspruch 1, **dadurch gekennzeichnet, dass** die Positionierungsleiste (14) fest an dem, insbesondere als ein Hohlraum oder eine Nut ausgebildeten, Kabelkanal (11) montiert ist.

3. Brandschutzabdeckung nach Anspruch 1 oder 2, **dadurch gekennzeichnet, dass** die formschlüssige Verbindung als eine Steckverbindung ausgebildet ist.

4. Brandschutzabdeckung nach einem der vorhergehenden Ansprüche, **dadurch gekennzeichnet, dass** die Positionierungsleiste (14) und das Festsetzelement (18, 21) aus brandhemmenden Material, insbesondere Brandschutzplatten (24, 25, 26), hergestellt sind.

5. Brandschutzabdeckung nach einem der vorhergehenden Ansprüche, **dadurch gekennzeichnet, dass** mehrere Abdeckelemente (16, 17) mittels einer Nut- und Federverbindung formschlüssig miteinander verbindbar sind.

6. Brandschutzabdeckung nach einem der vorhergehenden Ansprüche, **dadurch gekennzeichnet, dass** eine U-förmige Aufnahmeleiste (15) für das Abdeckelement (16, 17) vorgesehen ist.

7. Brandschutzabdeckung nach Anspruch 6, **dadurch gekennzeichnet, dass** das Abdeckelement (16, 17), insbesondere zum De- und Remontieren und/oder bei nicht eingesetzem Festsetzelement (18, 21), in der Aufnahmeleiste (15) verschiebbar ist.

8. Brandschutzabdeckung nach Anspruch 6 oder 7, **dadurch gekennzeichnet, dass** die Aufnahmeleiste aus brandhemmenden Material, insbesondere Brandschutzplatten (24, 25, 26), hergestellt ist, und vorzugsweise die Aufnahmeleiste (15) der der Positionierungsleiste (14) abgewandten Seite des Abdeckelementes (16, 17) zugeordnet ist.

9. Brandschutzabdeckung nach einem der vorhergehenden Ansprüche, **dadurch gekennzeichnet, dass** die Positionierungsleiste (14) eine Öffnung (19, 22) zur, insbesondere formschlüssigen, Aufnahme des Festsetzelementes (18, 21) aufweist.

10. Brandschutzabdeckung nach einem der vorhergehenden Ansprüche, **dadurch gekennzeichnet, dass** das Abdeckelement (16, 17) an der der Positionierungsleiste (14) zugewandten Seite eine Vertiefung (27) zur, insbesondere formschlüssigen, Aufnahme des Festsetzelementes (18, 21) aufweist.

11. Brandschutzabdeckung nach einem der vorhergehenden Ansprüche, **dadurch gekennzeichnet, dass** das Festsetzelement (18, 21) als ein Riegel oder ein Schwert ausgebildet ist.

12. Brandschutzabdeckung nach einem der vorhergehenden Ansprüche, **dadurch gekennzeichnet, dass** das Abdeckelement (16, 17) dreilagig aus Brandschutzplatten (24, 25, 26) aufgebaut ist, wobei vorzugsweise die Brandschutzplatten (24, 25, 26) miteinander verklammert sind.

13. Brandschutzabdeckung nach einem der vorhergehenden Ansprüche, **dadurch gekennzeichnet, dass** ein, vorzugsweise aus brandhemmenden Material, insbesondere Brandschutzplatten (24, 25, 26), hergestelltes, Verbundelement (20) zwischen zwei Abdeckelementen (16, 17) angeordnet und vorzugsweise lösbar mit den Abdeckelementen (16, 17) verbunden ist.

14. Brandschutzabdeckung nach einem der vorhergehenden Ansprüche, **dadurch gekennzeichnet, dass** Brandschutzdichtungen, insbesondere im Bereich der Positionierungsleiste (14), der Aufnahmeleiste (15) und/oder des Verbundelementes (20), vorgesehen sind.

15. Verwendung einer Brandschutzabdeckung (10) nach einem der vorhergehenden Ansprüche zum Abdecken eines Kabelkanals (11), insbesondere in einem Tunnel.
